# EUROPÄISCHE PATENTSCHRIFT

(11) **EP 3 965 555 B1**
(45) Veröffentlichungstag und Bekanntmachung des Hinweises auf die Patenterteilung: **01.05.2024**
(21) Anmeldenummer: 20731393.3
(22) Anmeldetag: 08.05.2020
(51) Int. Cl.: A01G 13/02

(54) **BIOLOGISCH ABBAUBARE PFLANZENSCHUTZVORRICHTUNG**
BIODEGRADABLE PLANT PROTECTION DEVICE
DISPOSITIF DE PROTECTION DE PLANTES BIODÉGRADABLE

(30) Priorität: 08.05.2019 DE 102019112041
(43) Veröffentlichungstag der Anmeldung: 16.03.2022
(73) Patentinhaber: Roser, Martin, B., 54340 Ensch (DE)
(72) Erfinder: Roser, Martin, B., 54340 Ensch (DE)
(74) Vertreter: Office Freylinger
(86) Internationale Anmeldenummer: PCT/EP2020/062814
(87) Internationale Veröffentlichungsnummer: WO 2020/225402

(56) Entgegenhaltungen:
- WO-A1-2017/062749
- AU-B2- 637 493
- DE-A1-102009 003 164
- DE-A1-102014 014 542
- GB-A- 2 442 333

## Beschreibung

### Technisches Gebiet

Die vorliegende Erfindung betrifft allgemein den Schutz von Pflanzensetzlingen in der Land- und Forstwirtschaft.

### Stand der Technik

Pflanzensetzlinge werden aktuell in der Regel mit Kunststoff enthaltenden Hülsen vor Insekten, Pilz und anderen Gefahren geschützt. Ebenfalls soll dadurch ein besseres Klima in der Hülse erzeugt werden, so dass die Pflanzen besser wachsen können. Am Markt erhältliche Lösungen sind lediglich Schutzhülsen für Pflanzensetzlinge mit Kunststoffanteilen.

Der Kunststoffanteil stellt jedoch eine Belastung für die Umwelt dar, da er - manchmal durch "Wind und Wetter" bedingt - nicht dauerhaft hält und sich schon vor dem gewollten Abbau in der Gegend verflüchtigt. Nachteilig bei diesen bekannten Schutzhülsen ist außerdem, dass sie nach einiger Zeit mühsam wieder eingesammelt werden müssen.

Das Dokument AU-B-637493 offenbart einen Pflanzenschutzring, der zum Schutz sowohl für die Wurzeln, als auch für die Blätter eines Sämlings geeignet ist und eine im Allgemeinen röhrenförmige zusammenhängende Formation aus getrockneter wässriger Aufschlämmung umfasst.

### Aufgabe der Erfindung

Eine Aufgabe der vorliegenden Erfindung ist es, biologisch abbaubare Pflanzenschutzvorrichtungen zu entwickeln, wobei diese Pflanzenschutzvorrichtungen gezielt Eigenschaften und Mechanismen enthalten, die auf eine bessere Pflanzenentwicklung bzw. das Pflanzenwachstum abgestimmt sind, aber trotzdem den Anforderungen an Haltbarkeit und Festigkeit entsprechen müssen.

### Allgemeine Beschreibung der Erfindung

Diese Aufgabe wird erfindungsgemäß gelöst durch eine Pflanzenschutzvorrichtung, insbesondere für Pflanzensetzlinge, wobei die Pflanzenschutzvorrichtung einen Mantel aufweist der in Form eines Hohlzylinders, eines drei- oder mehrseitigen Hohlprismas oder eines Kegelstumpfs ausgestaltet oder ausgestaltbar ist, wobei der Mantel aus einem Material besteht, das als Grundmaterial Trester, Holzschnitzel, Holzmehl, gemahlener Grünschnitt oder Mischungen davon und als Bindemittel, bezogen auf die Gesamtmasse der Pflanzenschutzvorrichtung, einen Masseanteil von 2 bis 80 %, bevorzugt 3 bis 60 %, z.B. 4 bis 50 %, eines Bindemittels ausgewählt aus Kaseinleim, Stärke, Dextrin, Wasserglas, tierischen, pflanzlichen, synthetischen aber auch mineralischen Wachsen, wie z.B. Paraffinwachs oder Bienenwachs, bzw. Wachsemulsionen, Lignin, Gummi arabicum, biologisch abbaubare Thermoplaste oder Mischungen davon, beinhaltet.

Weiterhin betrifft die Erfindung ein Verfahren zur Herstellung einer Pflanzenschutzvorrichtung, insbesondere für Pflanzensetzlinge, wobei Grundmaterial und Bindemittel in flächiger Form oder in Form eines Hohlzylinders, eines drei- oder mehrseitigen Hohlprismas oder eines Kegelstumpfs zu einem Mantel ausgestaltet wird, wobei der Mantel aus einem Material besteht, das als Grundmaterial Trester, Holzschnitzel, Holzmehl, gemahlener Grünschnitt oder Mischungen davon und als Bindemittel, bezogen auf die Gesamtmasse der Pflanzenschutzvorrichtung, einen Masseanteil von 2 bis 80 %, bevorzugt 3 bis 60 %, z.B. 4 bis 50 %, eines Bindemittels ausgewählt aus Kaseinleim, Stärke, Dextrin, Wasserglas, tierischen, pflanzlichen, synthetische aber auch mineralischen Wachsen, wie z.B. Paraffinwachs oder Bienenwachs, bzw. Wachsemulsionen, aber auch Lignin, Gummi arabicum, biologisch abbaubare Thermoplaste oder Mischungen davon, beinhaltet. Natürliche Weichmacher, wie z.B. Glycerin, können dabei zur Bindemittelherstellung zum Einsatz kommen, um z.B. die Duktilität zu erhöhen.

Das Grundmaterial der erfindungsgemäßen Pflanzenschutzvorrichtungen beinhaltet somit Trester (mit oder ohne Kerne), Holzschnitzel, Holzmehl, gemahlener Grünschnitt oder Mischungen davon.

Weiterhin kann der Mantel als stabilisierende Gitterstruktur pflanzliche Fasern, vorzugsweise ausgewählt aus Baumwolle, Hanf, Stroh oder Mischungen davon, beinhalten. Je nach Ausführung können die pflanzlichen Fasern in das Grundmaterial eingearbeitet werden oder aber z.B. als Geflecht oder Gewirke an der Innen- oder Außenseite des Mantels angebracht, z.B. mit einem Bindemittel verklebt werden. Die pflanzlichen Fasern der stabilisierenden Gitterstruktur weisen im Gegensatz zu den Fasern die gegebenenfalls im Grundmaterial enthalten sind eine Länge von wenigstens 15 mm, bevorzugt wenigstens 25 mm, im allgemeinen eine Länge von 30 bis 100 mm oder mehr je nach Anwendung. Zusätzlich zur stabilisierenden Funktion können die eingebrachten pflanzlichen Fasern die Verwitterung der Pflanzenschutzvorrichtungen verlangsamen und somit deren Lebensdauer verlängern. Alternativ ist auch die Einbringung einer Folie aus Kasein zur Stabilisierung der Pflanzenschutzvorrichtung, wie z.B. in DE4309528A1 beschrieben, vorgesehen. Diese bringt vielerlei positive Eigenschaften mit sich, wie die Herstellung einer folienartigen Pflanzenschutzvorrichtung, die mit organischen Materialien versetzt wird (Trester, Gras, Gärresten).

In einigen Ausführungsformen, beinhaltet das Bindemittel und/oder das Grundmaterial wenigstens in einem Teilbereich des Mantels, bevorzugt einem oberen Teilbereich, vorzugsweise in der oberen Hälfte, z.B. im oberen Drittel des Mantels, eine oder mehrere das Grundmaterial und/oder das Bindemittel abbaufördernde reaktive Substanz(en), die naturgegeben (Sonneneinwirkung, Regen oder atmosphärischen Eigenschaften) freigesetzt werden. Eine solche reaktive Substanz kann dabei eingearbeitete feste Zitronensäure, Ascorbinsäure Essigsäure, oder allgemein Carbonsäuren sein oder aber auch allgemein in fester Form gebundene Mineralsäuren, welche mit dem im Bindemittel enthaltenem Reaktionspartner, wie z.B. Kalk reagiert. Ein weiteres Beispiel wäre der Abbau im Bindemittel oder Grundmaterial enthaltener Stärke, Zellulose, Fette oder Eiweiße durch im Grundmaterial oder Bindemittel, z.B. im Wachs, enthaltene Enzyme. Geeignete Enzyme sind je nach Ausführung (Zusammensetzung des Bindemittels bzw. des Grundmaterials) bevorzugt Hydrolasen, wie Glycosidasen, z.B. Cellulase und Amylase, Peptidasen, z.B. Pepsin, und/oder Esterasen, z.B. Lipasen. In manchen Ausgestaltungen ist oder enthält das Bindemittel wenigstens in dem Teilbereich des Mantels dabei bevorzugt Wachse, z.B. Bienenwachs, Paraffinwachs oder Mischungen davon. Denkbar ist auch die umgekehrte Einarbeitung der Reaktionsstoffe, so dass alkalische Bestandteile im Wachs enthalten sind, das Bindemittel entgegen saure Bestandteile aufweist. Die das Grundmaterial und/oder das Bindemittel abbaufördernde reaktive Substanzen können aus mineralischen und organischen Säuren, z.B. Carbonsäuren, wie Zitronensäure, Ascorbinsäure oder Essigsäure; und Enzymen, bevorzugt Hydrolasen, wie Glycosidase, Peptidase und/oder Esterase, z.B. Cellulase, Amylase, Pepsin, oder Lipase, ausgewählt werden. Das Bindemittel kann teilweise auch aus einer oder mehreren wasserlöslichen Substanzen bestehen oder diese enthalten, die durch einen Regenschauer die reaktive Substanz(en) freigibt.

Vorteilhaft ist dabei die Zersetzung der Hülse von oben herab. Dies kann durch einen auf der Kopfseite der Hülse aufgesetzten Paraffinring erreicht werden, der in sich die reaktiven Mittel zur Zersetzung der Hülsenstruktur beinhaltet. Der Rest der Hülse beinhaltet dabei z.B. eine Substanz im Bindemittel, welches in einer definierten Menge enthalten ist und die auf das reaktive Mittel reagierende Substanz enthält. Die Sonneneinwirkung und damit Wärmentwicklung an der Schutzhülse lässt in diesem Fall den Paraffinring schmelzen, so dass die reaktive Flüssigkeit freigesetzt wird und der Zersetzungsprozess der Hülse von oben herab beginnt. Der Zersetzungsprozess ist so bestimmt, dass das Pflanzenwachstum nicht gestört wird und negative Einflüsse auf die Pflanze vermindert oder nicht vorhanden sind.

Erfindungsgemäß stellt das Bindemittel gleichfalls ganz oder teilweise das Zeitglied der definierten Zersetzung dar. Der Zersetzungsprozess kann weiterhin so gestaltet werden, dass der Zerfall oberhalb beginnt und vorerst dort am stärksten ausgeprägt ist. Das hat den Vorteil, dass sich die Jungpflanze an die Sonnenintensität gewöhnen kann und ihre frischen Blätter nicht gleich verbrennen bzw. die Photosyntheseleistung nicht gemindert wird. Gleichfalls wird erreicht, dass im unteren Teil der Vorrichtung die Geiztriebbildung vermindert wird und die Jungpflanze sich ungestört entwickeln kann. Dieser Mechanismus kann durch händische Betätigung ausgelöst werden aber auch als abbaufördernde reaktive Substanzen in einem Trägermittel eingearbeitet sein, wie z.B. einem Wachs (Paraffin oder Bienenwachs), welches durch Sonneneinstrahlung die abbaufördernde reaktive Substanzen freigibt und der Zerfall beginnt. Auch einem zu schnellem Austrocknen der Hülse, kann so vorgebeugt werden. Die abbaufördernden reaktiven Substanzen reagieren dabei mit dem Bindemittel und/oder dem Grundmaterial und zersetzen und durchlöchern so die Mantelfläche an verschiedenen Stellen. Ein weiterer Vorteil der oben beginnenden Zersetzung des Mantels ist, dass das herabfallende Material die Pflanzenschutzvorrichtung zum Boden hin weitgehend abdichtet und so wenigstens teilweise einen Kamineffekt innerhalb der Vorrichtung verhindert der für die Jungpflanze schädlich wäre (siehe auch weiter unten).

In vorteilhaften Ausführungen der Pflanzenschutzvorrichtungen weist dessen Innenseite eine helle, bevorzugt weiße Oberfläche auf. Bevorzugt ist diese Oberfläche eine Schicht aus Kalk oder Kalkfarbe. Dadurch wird eine Optimierung der Sonneneinstrahlung in den Innenraum erreicht, wobei mittels Reflektion für bessere Lichtverhältnisse gesorgt wird. Gleichfalls kann diese Schicht die Rauigkeit des Mantels herabsetzen, um z.B. das Scheuern der Jungpflanze beim Wachsen zu reduzieren.

In weiteren Ausführungen umfasst die Vorrichtung ein gewölbtes oder flaches mit dem Mantel verbundenes Bodenteil, das ein oder mehrere Löcher, bevorzugt ein Loch in der Mitte, aufweist. Die Jungpflanze kann dort vor der handlichen oder maschinellen Auspflanzung hineingesteckt und gleich mit der Pflanzenschutzvorrichtung in den Boden eingearbeitet werden.

Das Grundmaterial kann zusätzlich wenigstens teilweise vergärte Biomasse beinhalten, bevorzugt vergärter Kot oder vergärte tierische Gülle, besonders bevorzugt Hühnerkotgärreste aus einer Biogasanlage.

Der Begriff Biomasse im Sinne der Erfindung ist als energietechnische Biomasse zu verstehen und umfasst ausschließlich tierische und pflanzliche Erzeugnisse, die zur Gewinnung von Heizenergie, von elektrischer Energie und als Kraftstoffe dienen können. Im Vergleich mit den ökologischen Biomasse-Begriffen, ist der energietechnische Biomasse-Begriff somit viel enger gefasst. Erstens bezieht er sich bevorzugt ausschließlich auf tierische und pflanzliche, meistens jedoch nicht auf ausschließlich mikrobielle Stoffe, bzw. zweitens umfasst er innerhalb der tierischen und pflanzlichen Stoffe vorzugsweise nur solche Substanzen, die durch Mikroorganismen oder Enzyme abgebaut und energietechnisch verwertet werden können.

Nach der aktuellen Definition Gärung (Gemeinsame Normdatei GND: 4155803-0), handelt es sich um einen energieliefernden anaeroben mikrobiellen Abbau organischer Stoffe ohne die Einbeziehung von externen Elektronenakzeptoren, wie z.B. Sauerstoff. Der Abbau von Kohlenhydraten mit organischen Wasserstoffakzeptoren, steht hier im Vordergrund. Gleichbedeutend wäre anaerobe Fermentation, da die Gärung ein Teilbereich der Fermentation ist. Zum Stand der Technik gehören dabei die Biogasanlagen, die in einem anaeroben Milieu in einem Fermenter, organische Substanzen vergärt, wobei nebst der Methanproduktion ein nährstoffhaltiger Gärrest anfällt. Dieser wird nebst der Eigenverwertung als Dünger auch als Wirtschaftsdünger eingesetzt.

Zur Verstoffwechselung in einer Vergärungsanlage, z.B. einer Biogasanlage, werden generell jene Stoffe genutzt, die energetisch sinnvoll sind und bilden somit einen bevorzugten Rahmen für "vergärte Biomasse", im Kontext mit der Herstellung einer erfindungsgemäßen Pflanzenschutzvorrichtung. Vergärte Biomasse im Sinne der Erfindung beinhaltet folglich tierische und pflanzliche Erzeugnisse die einer Gärung oder Vergärung, also einem anaeroben mikrobiellen Abbau unterworfen wurden, beispielsweise in einer Biogasanlage. Als Beispiele bevorzugter Ausgangsprodukte der Vergärung können Maissilage, Grassilage, Wiesen- oder Ackergras, Roggen-Ganzpflanzensilage, Futterrübe, biologische Abfälle, Hühnermist, Zuckerrüben, Schweinemist und -gülle, Rindermist und -gülle, Getreideschlempe, Schweinegülle, Rindergülle, Trester, Fallobst aber auch Biomüll, Holz, Hausmüll, Grünschnitt oder Abfallprodukten aus der Lebensmittelproduktion, usw. genannt werden.

Bevorzugt beinhaltet die vergärte Biomasse vergärten Tierkot und/oder vergärte tierische Gülle. Gülle besteht hauptsächlich aus Urin und Kot landwirtschaftlicher Nutztiere. Je nach Beigabe von Einstreu und Wasser spricht man von Dick- oder Dünngülle, Schwemmmist oder Flüssigmist. Vergärter Tierkot oder vergärte tierische Gülle im Sinne der Erfindung besteht demnach aus den Gärresten einer Vergärungsanlage, wie z.B. Biogasanlagen und kann ggf. auch andere vergärte organische Abfälle beinhalten.

Das Grundmaterial kann in feuchter oder trockner Form verwendet werden. Allgemein wird das Rohmaterial zur Herstellung einer ökologischen Pflanzenschutzvorrichtung mehreren Fertigungsschritten unterworfen werden, wie z.B. thermische Trocknung, Häckseln, Mahlen, Separieren, usw.

Wie unten weiter ausgeführt, ist der Anteil des Grundmaterials je nach Anwendung unterschiedlich. In den meisten Fällen liegt dieser Anteil jedoch mindestens bei 5 Masse-% der Trockenmasse, generell überwiegend zwischen 10 und 95 Masse-%, bevorzugt zwischen 20 und 40 Masse-%, bezogen die Masse der Pflanzenschutzvorrichtung.

Die Pflanzenschutzvorrichtungen können ein- oder mehrstückig ausgeführt werden. Im Fall einer mehrstückigen Ausgestaltung, sind die Einzelteile vorzugsweise so gestaltet, dass sie sich einfach zusammenfügen lassen, z.B. durch geeignete formschlüssige oder kraftschlüssige Verbindungen, wie beispielsweise Steckverbindungen. Wird die Pflanzenschutzvorrichtung in flächiger Form hergestellt, wird sie zu einem späteren Zeitpunkt, z.B. vor Ort, aufgerollt oder gefaltet um einen Hohlzylinder, einen drei- oder mehrseitiges Hohlprisma oder einen Kegelstumpf zu formen. Zweckmäßigerweise weist in dem Fall zumindest einer der zusammenzuführende Ränder bevorzugt Befestigungsmittel auf, um die Ränder entweder auf Kante oder überlappend miteinander zu verbinden. Um Transport- und Lagerkosten zu verringern, kann es vorteilhaft sein die Pflanzenschutzvorrichtungen in flächiger Form herzustellen und dann erst vor Ort zusammenzurollen oder -falten. Ebenfalls interessant sind kegelstumpfförmige Ausführungen wobei sich die so gestalteten Pflanzenschutzvorrichtungen ineinander stecken lassen und so zusätzlich während dem Transport geschützt sind.

Der Mantel der Pflanzenschutzvorrichtungen kann ganzheitlich geschlossen oder teilweise oder ganz mit Schlitzen oder Löchern versehen sein. Alternativ, kann der Mantel auch als Gitterkonstrukt ausgeführt werden.

Die erfindungsgemäßen Pflanzenschutzvorrichtungen können Jungpflanzen, wie z.B. Weinreben, nicht nur bis zur Selbstüberlassung vor Insekten, Pilz und anderen Gefahren schützen, sondern außerdem dem Boden durch ihren langsamen Abbau wertvolle Nährstoffe über längere Zeit zuführen. Dabei dienen die organischen Bestandteile der Ernährung von Bodenorganismen, die ihrerseits Nährstoffe den Jungpflanzen verfügbar machen. Die erfindungsgemäßen Pflanzenschutzvorrichtungen fördern durch ihre langsame Verwitterung die Wechselwirkungen zwischen Boden und Pflanze sowie die Stoffwechselprozesse im Boden.

Die Lebensdauer der Pflanzenschutzvorrichtungen, d.h. die Zeit vom Aufstellen im Feld bis zu deren Verwitterung, kann dabei je nach Pflanzenart derart eingestellt werden, dass die Pflanzenschutzvorrichtungen nach ein paar Wochen bis hin zu zwei oder mehr Jahren völlig abgebaut sind. Die erfindungsgemäßen Pflanzenschutzvorrichtungen sind 100 % ökologisch und ein Einsammeln der Pflanzenschutzvorrichtungen ist nicht mehr notwendig. Außerdem erlaubt die Verwendung der erfindungsgemäßen Pflanzenschutzvorrichtungen eine ästhetische Bewirtschaftung von Feldern und Weinbergen.

Je nach Pflanzenart und Bodenbeschaffenheit kann dem Grundmaterial zusätzlich mineralische Dünger, wie z.B. Kalk, zugesetzt werden um so eine gezielte Düngung der Pflanzen zu erreichen und gegebenenfalls sogar eine Aufwertung des Bodens zu bewirken. Es kann auch von Vorteil oder zweckmäßig sein dem Grundmaterial ökologische Pflanzenschutzmittel zuzusetzen, wie z.B. Pflanzenschutzmittel die für den ökologischen Landbau nach der Verordnung (EG) Nr. 834/2007 zugelassenen sind.

In einer bevorzugten Ausgestaltung der Erfindung enthalten die Pflanzenschutzvorrichtungen Thermoplaste aus nachwachsenden Rohstoffen, wie Mischungen aus Lignin mit Flachs-, Hanf- oder anderen Fasern. Sehr gut geeignet sind kunststoffähnliche aber natürliche Materiale wie z.B. Arboform (http://arboform.de/deutsch) oder Arboblend von der Firma TECNARO GmbH oder z.B. ein Polymer aus Kasein (Fa. Qnature UG), welche als Granulat erhältlich sind. Die Zugabe solcher thermoplastischen aber abbaubaren Bindemittel ermöglicht oder vereinfacht die Herstellung der Pflanzenschutzvorrichtungen durch Spritzguss oder Extrusion.

Grundsätzlich richten sich die Abmessungen der Pflanzenschutzvorrichtungen an denen der zu schützenden Pflanzen. Die Mantelstärke der Pflanzenschutzvorrichtungen wird jedoch prinzipiell je nach Einsatz und gewünschter Lebensdauer eingestellt. Üblicherweise beträgt die Mantelstärke zwischen 1 und 15 mm, vorzugsweise zwischen 1,5 und 7 mm.

Falls notwendig, z.B. sofern es tierischen Kot oder Gülle enthält, wird das Grundmaterial vor, während oder nach der Herstellung der Pflanzenschutzvorrichtungen hygienisiert, d.h. von Keimen befreit. Dies kann mittels jedes bekannten Verfahrens durchgeführt werden, z.B. durch Erhitzen, mittels Mikrowellenbehandlung, usw. Das Grundmaterial kann durch jede geeignete Maßnahme geformt (d.h. ausgestaltet) werden. Geeignete Maßnahmen beinhalten u.a. Walzen, Stanzen, Pressen, Spritzgießen, Extrusion, usw.

### Kurze Beschreibung der Figuren

Weitere Einzelheiten und Vorteile der Erfindung können der nachfolgenden ausführlichen Beschreibung möglicher Ausführungsformen der Erfindung anhand der beiliegenden Figuren entnommen werden. Diese zeigen:

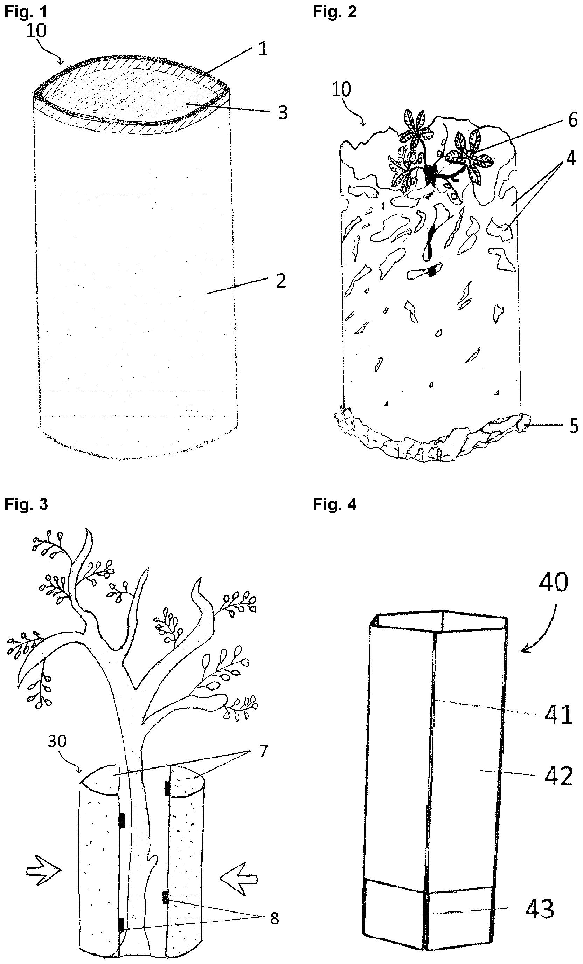

Fig. 1-4: schematische Darstellungen verschiedener Varianten erfindungsgemäßer Pflanzenschutzvorrichtungen.

### Beschreibung mehrerer Ausgestaltungen der Erfindung

Die Erfindung betrifft eine Pflanzenschutzvorrichtung, die (größtenteils) aus einem biologisch abbaubaren Mantel besteht. Das Grundmaterial des Mantels kann dabei aus Trester (mit oder ohne Kerne), Holzschnitzeln, Stroh, Holzmehl oder gemahlenen Grünschnitt bestehen. Ferner können auch vergärte biologische Substanzen (vergärte Biomasse) einen Teil der Vorrichtung bilden. Eine stabilisierende Gitterstruktur, z.B. aus Baumwolle oder Stroh oder aber auch allg. Fasern aber auch Mischungen daraus, können in den Mantel mit eingebaut werden.

Die Pflanzenschutzvorrichtung ist bevorzugt so konstruiert, dass sie unter Witterungseinflüssen (Sonnenlicht, Regen, usw.) und/oder Zusatzmechanismen aus der Natur (z.B. Sauerstoff in der Luft) bzw. einem angebrachten auslösbarem Mechanismus innerhalb einer definierten Zeitspanne zerfällt. Diese Zeitspanne kann zwischen 1-3 Jahren liegen. Dadurch ergibt sich außer den bereits genannten Vorteilen aber auch die Minderung der Spätfrostgefährdung durch einen verfrühten Austrieb.

Als Bindemittel kann Kaseinleim oder Mischungen aus Kaseinleim und anderweitigen biologischen Klebern, wie Stärke, Dextrin, usw. benutzt werden. Auch die Verwendung von Biopolymeren (siehe oben) ist vorteilhaft. Das Bindemittel kann gleichfalls ganz oder tlw. das Zeitglied der definierten Zersetzung darstellen und hat dabei einen Massenanteil von 2-80 Prozent, bevorzugt 3-60 Prozent, z.B. 4-50 Prozent, bezogen auf die Gesamtmasse. Der Zersetzungsprozess kann ferner so gestaltet werden, dass der Zerfall oberhalb beginnt und vorerst am stärksten ausgeprägt ist. Das hat den Vorteil, dass sich die Jungpflanze an die Sonnenintensität gewöhnen kann und ihre frischen Blätter nicht gleich verbrennen bzw. die Photosyntheseleistung nicht gemindert wird. Gleichfalls wird erreicht, dass im unteren Teil der Pflanzenschutzvorrichtung die Geiztriebbildung vermindert wird und die Jungpflanze sich ungestört entwickeln kann. Dieser Mechanismus kann durch händische Betätigung ausgelöst werden aber auch als reaktiver Stoff in einem Trägermittel eingearbeitet sein, wie z.B. einem Wachs (Paraffin oder Bienenwachs), welches durch Sonneneinstrahlung den reaktiven Stoff freigibt und der Zerfall beginnt. Auch einem zu schnellem Austrocknen der Pflanzenschutzvorrichtung, kann so vorgebeugt werden. Das Reaktionsmittel reagiert dabei mit dem Kleber und/oder mit einem integrierten biologischem Stoff, der die Mantelfläche an verschiedenen Stellen durchlöchert.

Die Klimabedingungen sollen in der Pflanzenschutzvorrichtung selbst optimiert werden. So kann mit Hilfe von eingebrachten biologischen Substanzen, wie Glycerin oder ähnlichen Stoffen, der Wasserhaushalt geregelt werden. Die hygroskopisch wirkende poröse und offenwandige Pflanzenschutzvorrichtung hat ohnehin eine wasserspeichernde Wirkung, die eingebrachten Substanzen regeln lediglich deren Haushalt. Generell kann ein Schichtenprinzip vorteilhaft sein, welches hydrophob und hydrophil ausgebildet ist. Mit der Regelbarkeit der Feuchtigkeit im Innenraum, kann die Gefahr von Krankheiten, wie z.B. Peronospora gemindert werden.

Zur Optimierung der Sonneneinstrahlung in den Innenraum, kann eine helle oder weiße Schicht aufgebracht werden, die mittels Reflektion für bessere Lichtverhältnisse sorgt. Eine solche Schicht, kann z.B. durch aufgebrachten Kalk oder Kalkfarbe hergestellt werden. Gleichfalls soll diese Schicht in seiner Rauigkeit herabgesetzt sein, um das Scheuern der Jungpflanze beim Wachsen zu reduzieren.

Zur Bekämpfung von Insekten und Pilzerkrankungen (z.B. Botrytis), sollen natürliche Stoffe, wie z.B. Knoblauch zum Einsatz kommen. Auch das Einbringen von langsam herausdiffundierenden chemischen Stoffen wie Herbizid, Switch oder Aminosol, ist möglich, um Infektionen oder Beikraut und Wildverbiss vorzubeugen.

Der Mantel kann im unteren Bereich auch so ausgebildet werden, dass mittels eines kleinen Schnittes mit einem Schneidwerkzeug, z.B. einem Messer, die Pflanzenschutzvorrichtung abgeschrägt werden kann. Somit wird es möglich, dass die Pflanzenschutzvorrichtung auch auf Steillagen vollflächig aufliegt und senkrecht aufgestellt werden kann. Auch seine Stabilität so zu gestalten, dass der Mantel durch Abbrechen angepasst werden kann, ist vorgesehen. Um einen Kamineffekt zu verhindern, soll der untere Bereich der Pflanzenschutzvorrichtung mit dem Boden verschlossen sein. Herkömmlich wird dies durch ein Eingraben in den Boden von ca. 5 cm erreicht. Die gleiche Vorgehensweise ist auch hier praktikabel, wobei eine Schicht oder ein Stützring aus einer Substanz eingearbeitet werden kann (Wachs oder ein Gemisch aus Harz und Wachs) welcher für einen Verschluss von Öffnungen, hervorgerufen durch Erosion erzeugt durch Starkregen, im unteren Bereich sorgt. Auch der von oben kontrollierte Zerfall, kann dabei für den dauerhaften Verschluss zwischen Boden und Pflanzenschutzvorrichtung sorgen, da die Zerfallsprodukte sich unten anlagern. Generell wird somit der Kaminwirkung entgegengewirkt.

In einer weiteren Ausgestaltung, ist der Boden der Pflanzenschutzvorrichtung in einer Wölbung oder als Flachboden bis auf ein Loch in der Mitte geschlossen. Die Jungpflanze kann somit in einfacher Weise vor der handlichen oder maschinellen Auspflanzung hineingesteckt und in den Boden eingearbeitet werden.

Die Pflanzenschutzvorrichtung kann mittels Stanz- oder Walzverfahren bzw. einem ähnlichen Verfahren zur Herstellung von Rohren z.B. Mannesmann-Verfahren hergestellt. Die Pflanzenschutzvorrichtung kann dabei nahtlos wie aber auch mit einer Naht ausgestaltet sein.

Die erfindungsgemäßen Pflanzenschutzvorrichtungen können ganzheitlich als Hohlzylinder, in Form eines Quaders, oder generell eines mehrseitigen Prismas, oder als Kegelstumpf als festes, wie auch als flexibles und aufroll- oder faltbares Produkt ausgestaltet werden. Weiterhin besteht die Möglichkeit, dass die Pflanzenschutzvorrichtung aus mehreren gebündelten Stäben, in längsseits wabenförmig mit ökologischem Material gefüllten Röhren oder als Halbschale bzw. gewebt gefertigt wird. Ein implementierter oder außen angebrachter Inliner aus Stroh oder anderweitigen Materialien, kann dabei zur Stabilisierung des Konstruktes in Form eines Geflechtes eingearbeitet werden. Ebenfalls kann es für manche Anwendungsbereiche eventuell von Vorteil oder von Nöten sein, den Innenbereich oder Außenbereich mit einer allumschließenden Hülle aus Holz oder ähnlichem Werkstoff zu versehen. Weiterhin gilt noch zu ergänzen, dass eine gänzlich quer ausgestaltete Wabenhülse aus biologisch abbaubarem oder nicht verwitterungsfähigem Material, bei der die Waben quer zur Länge der Pflanzenschutzvorrichtung ausgebildet sind, eine geeignete Konstruktion zur Einarbeitung von Gärresten bzw. humusbildenden Substanzen darstellen würde. Naheliegend sind selbstverständlich andere in der Geometrie bekannte Formen als Strukturgebung, wie z.B. eine runde Anordnung.

Ein geeignetes Bindemittel, z.B. ein organischer Kleber oder Haftverbinder dabei, unter Berücksichtigung einer zeitlich begrenzten Zersetzung unter Einwirkung von Luft und deren Bestandteilen, der Einwirkung von Sonnenlicht und/oder Wasser in Form von Niederschlag, sorgt für den nötigen Zusammenhalt der Pflanzenschutzvorrichtung, und kann somit den gewollten Zerfall beeinflussen.

Unterschiedliche Bereiche der Pflanzenschutzvorrichtung, können so ausgestaltet werden, dass sie unterschiedlichen Anforderungen angepasst werden können. So kann z.B. der untere Bereich durch die hydrophile Eigenschaft mit Insektenschutz beaufschlagt, der Mittelbereich mit Dung bzw. verbissschützenden Materialien und der obere Bereich mit rein humusbildenden Substraten die auch hydrophobe Eigenschaften aufweisen können, aufgebaut sein.

Die Pflanzenschutzvorrichtung kann ganzheitlich geschlossen, als reine Gitterkonstrukt ausgeführt bzw. mit Schlitzen oder Löchern versehen oder aber als Mischkonstrukt ausgebildet sein.

Das Einarbeiten von mineralischem Dünger bzw. zur Verbesserung der Pflanzenentwicklung und Bodenaufwertung anderweitig der in der Land-, Forst- und Agrarwirtschaft bekannten Hilfsstoffe ist ebenfalls möglich.

Die Vorteile der erfindungsgemäßen Pflanzenschutzvorrichtungen sind z. B.:
- Verarbeitung von biologischem und daher nachhaltigem Material
- Vielseitigkeit in der Verwendung der Pflanzenschutzvorrichtung
- Anpassung auf geographische und einhergehend ökologischen Anforderungen
- Umweltentlastung durch Fernbleiben von Kunststoff in der Land- und Forstwirtschaft
- Aufwertung des Bodens
- Reduzierung von Schäden am Pflanzgut durch Vorhandensein von ökologischen Pflanzenschutzmitteln
- Einsparung von Mehraufwand durch Einsammeln von Kunststoffhülsen
- Verbessertes Pflanzenwachstum
- Gezielte Düngung, so dass eine Flächendüngung nicht notwendig ist
- Einsparung von Dünger
- Feuchtigkeitsspeichernde Fähigkeit durch integrierte hydrophile Materialien

Anforderungen an die Pflanzenschutzvorrichtungen, Haltbarkeit/Abbaubarkeit, Festigkeit, usw.

Ihr Eigengewicht und die Mantelstärke werden durch die gewählten Substrate so ausgestaltet, dass sie einfach zu transportieren und zu verarbeiten ist. Die Festigkeit wird dabei so gewählt, dass sie während der Handhabung und auf dem Weg der Einbringung nicht brechen bzw. Ablöseerscheinungen in der Mantelfläche aufweisen. Die optionale in sich gebende Gewebestruktur bzw. die Bindemittel, binden falls nötig die organischen Materialien, so dass diese sich nicht aus dem Verbund lösen.

Erfindungsgemäß erfolgt die Zersetzung der Pflanzenschutzvorrichtung erst nach der Verwendung auf dem Feld, so dass die Lagerung der Pflanzenschutzvorrichtung keine Probleme mit sich bringt.

Die Abbaubarkeit unter genannten Einflüssen ist auf die notwendige Schutzdauer der jeweiligen Jungpflanzen ausgelegt. Ablösungen und Auflösungserscheinungen während der Nutzung der Pflanzenschutzvorrichtung sind erwünscht, dürfen jedoch den Schutz der Pflanze bis zum Ende der kritischen Wachstumsphase nicht beeinträchtigen.

Die Pflanzenschutzvorrichtungen können je nach Anforderung des Bodens und Wunsch des Kunden hydrophil aber auch hydrophob ausgeführt werden.

Sofern ein stabiles nicht verwitterungsfähiges Konstrukt im Innenbereich gewählt wurde, ist dieses vorzugsweise einfach zu demontieren (z.B. 2-schalig).

Eine maschinell gewebte oder geflochtene Stützschicht innen und/oder außen aus Garn, Hanf, Gras, Stroh oder ähnlich langfaserigem Material, ist ebenfalls möglich. Durch eine geeignete Maschinenunterstützung, können die Stützschichten geflochten bzw. gewebt werden.

Die Pflanzenschutzvorrichtungen können aus einem biologischen homogenen oder heterogenen Vollmaterial gestanzt bzw. geschnitten werden. Ebenfalls ist das Pressen der Substrate in einer Form eine sehr geeignete Methode zur Herstellung von Pflanzenschutzvorrichtungen definierter geometrischer Form.

Die erfindungsgemäßen Pflanzenschutzvorrichtungen können in allen Bereichen der Land- und Forstwirtschaft Anwendung finden, wie z.B. in der Wein-, Acker- und Forstwirtschaft, inkl. Baumschulen. Als einzelne bzw. mehrstückige oder zusammenroll- oder -faltbare Ausgestaltungen können die Pflanzenschutzvorrichtungen auch als Anbauunterstützung von Bestandspflanzen (z.B. als 2-schalige Ausführung) dienen.

### Beispiele einiger Ausgestaltungen

Die Fig. 1 stellt eine zylindrische Pflanzenschutzvorrichtung 10 dar, die am Kopf mit einem Wachsring 1 ausgestattet ist, welche eine reaktive Substanz enthält, die den Hülsenkörper in einer definierten Zeit sich zersetzen lässt. Das Grundmaterial des Mantels 2 besteht hier aus Trester mit Kaseinleim als Bindemittel. Die Innenfläche 3 ist weiß gekalkt zur Verbesserung der Sonneneinstrahlung in den Hülsenkörper

Die Fig. 2 stellt die gleiche Pflanzenschutzvorrichtung 10 wie in Fig. 1 dar, nur dass hier der Zerfallsprozess eingesetzt hat und die Hülse von oben her abgebaut und durchlöchert 4 wird. Die Zerfallsprodukte 5 siedeln sich am Boden an und vermindern den Kamineffekt. Eine Jungrebe 6 entwächst der Pflanzenschutzvorrichtung 10 und kann sich allmählich den tatsächlichen Witterungsbedinungen anpassen.

Figur 3, zeigt eine Ausführung einer Pflanzenschutzvorrichtung 30 aus zwei Schalen 7, die im Nachhinein angebracht werden kann. Der Mantel selbst besteht dabei aus Trester mit einem Bindemittel, welches unter den Witterungseinflüssen zerfällt. Seitliche Federn 8, sorgen dafür für eine seitliche stabile Zusammenführung der beiden Schalen 7.

Der Mantel 42 der Pflanzenschutzvorrichtung 40 in Fig. 4 besitzt als Grundform ein 6-seitiges Prisma, dessen unterer Bereich ebenfalls längsseits Schlitze 43 aufweist. Dieser Form wird sich bevorzugt bedient, sofern für die Herstellung eine flächige Ausgestaltung gewählt wird. Auffällig ist dabei die Knickkante 41, die sich bei der Faltung des Mantels 42 der Pflanzenschutzvorrichtung 40 ergibt.

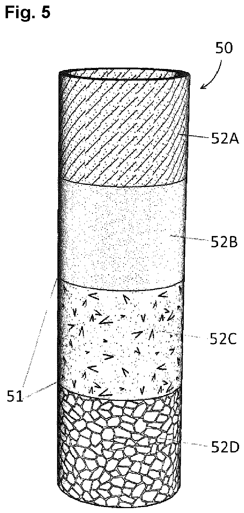

Die Fig. 5, stellt eine mehrstückige Pflanzenschutzvorrichtung 50 dar, wie sie bereits oben beschrieben wurde. Die Zusammensetzung und Auslegung der Hülsensegmente, erfolgt nach dem Bedarf des Bodens, auf dem sie platziert werden soll. Mittels der genannten und geeigneten Verbindungsarten werden die Mantelsegmente 52A-52D untereinander an den Ansätzen 51 verbunden. Das Beispiel der Fig. 4 zeigt, dass hier eine Pflanzenschutzvorrichtung 4-stückig gefertigt wurde, dessen oberer Ring aus vergärter Grassilage oder Trester besteht 52A, der Ring 52B aus Kalk gepresst wurde, der Ring 52C aus einer vergärten Mixtur aus Hühnertrockenkot und Trester/Grassilage und der untere Ring 52D aus einem hydrophilen mit ökologischem Pflanzenschutzmittel beaufschlagten Trester- /Grassilagegärrest besteht.

Der Schutzumfang der vorliegenden Erfindung wird durch die angefügten Ansprüche definiert.

### Zeichenerklärung:

- 10, 30, 40, 50: Pflanzenschutzvorrichtung
- 1: Wachsring
- 2: Mantel
- 3: Innenfläche
- 4: Durchlöcherungen
- 5: Zerfallsprodukte
- 6: Jungrebe
- 7: Schalen
- 8: Federn
- 41: Knickkante
- 42: Mantel
- 43: Schlitze
- 51: Ansätze
- 52A-52D: Mantelsegmente

## Patentansprüche

1. Pflanzenschutzvorrichtung (10), insbesondere für Pflanzensetzlinge, wobei die Pflanzenschutzvorrichtung (10) einen Mantel (2) aufweist der in Form eines Hohlzylinders, eines drei- oder mehrseitigen Hohlprismas oder eines Kegelstumpfs ausgestaltet oder ausgestaltbar ist, wobei der Mantel (2) aus einem Material besteht, das als Grundmaterial Trester, Holzschnitzel, Holzmehl, gemahlener Grünschnitt oder Mischungen davon und als Bindemittel, bezogen auf die Gesamtmasse der Pflanzenschutzvorrichtung, einen Masseanteil von 2 bis 80 % eines Bindemittels ausgewählt aus Kaseinleim, Stärke, Dextrin, Wasserglas, tierischen, pflanzlichen, synthetischen aber auch mineralischen Wachsen, wie z.B. Paraffinwachs oder Bienenwachs, bzw. Wachsemulsionen, Lignin, Gummi arabicum, biologisch abbaubaren Thermoplasten oder Mischungen davon, beinhaltet, wobei der Mantel (2) weiterhin als stabilisierende Gitterstruktur pflanzliche Fasern, vorzugsweise ausgewählt aus Baumwolle, Hanf, Stroh oder Mischungen davon, oder als stabilisierende Stützstruktur eine Folie aus Kaseinleim, beinhaltet.

2. Pflanzenschutzvorrichtung nach Anspruch 1, wobei das Grundmaterial zusätzlich wenigstens teilweise vergärte Biomasse beinhaltet, bevorzugt vergärter Kot oder vergärte tierische Gülle, besonders bevorzugt Hühnerkotgärreste aus einer Biogasanlage und/oder wobei das Grundmaterial zusätzlich mineralische Dünger, ökologische Pflanzenschutzmittel oder Mischungen davon beinhaltet.

3. Pflanzenschutzvorrichtung nach Anspruch 1 oder 2, wobei das Bindemittel und/oder das Grundmaterial wenigstens in einem Teilbereich des Mantels, bevorzugt einem oberen Teilbereich, vorzugsweise im oberen Drittel des Mantels, eine oder mehrere das Grundmaterial und/oder das Bindemittel abbaufördernde reaktive Substanz(en) beinhaltet, wobei das Bindemittel vorzugsweise wenigstens in dem Teilbereich des Mantels Bienenwachs, Paraffinwachs oder Mischungen davon beinhaltet oder im Wesentlichen daraus besteht.

4. Pflanzenschutzvorrichtung nach Anspruch 3, wobei die das Grundmaterial und/oder das Bindemittel abbaufördernde(n) reaktive(n) Substanz(en) aus mineralischen und organischen Säuren, z.B. Carbonsäuren, wie Zitronensäure, Ascorbinsäure oder Essigsäure; und Enzymen, bevorzugt Hydrolasen, wie Glycosidasen, Peptidasen und/oder Esterasen, z.B. Cellulase, Amylase, Pepsin oder Lipase, ausgewählt ist/sind.

5. Pflanzenschutzvorrichtung nach einem der Ansprüche 1 bis 4, wobei die Mantelstärke zwischen 1 und 15 mm, vorzugsweise zwischen 1,5 und 7 mm beträgt.

6. Pflanzenschutzvorrichtung nach einem der Ansprüche 1 bis 5, wobei die Innenseite der Pflanzenschutzvorrichtung eine helle, bevorzugt weiße Oberfläche aufweist, bevorzugt eine Schicht aus Kalk oder Kalkfarbe.

7. Pflanzenschutzvorrichtung nach einem der Ansprüche 1 bis 6, welche ein gewölbtes oder flaches mit dem Mantel verbundenes Bodenteil umfasst, das ein oder mehrere Löcher, bevorzugt ein Loch in der Mitte, aufweist.

8. Pflanzenschutzvorrichtung nach einem der Ansprüche 1 bis 7, wobei das Grundmaterial mit dem Bindemittel gestanzt, gewalzt, gepresst, spritzgegossen oder extrudiert ist.

9. Verfahren zur Herstellung einer Pflanzenschutzvorrichtung (10), insbesondere für Pflanzensetzlinge, wobei Grundmaterial und Bindemittel in flächiger Form oder in Form eines Hohlzylinders, eines drei- oder mehrseitigen Hohlprismas oder eines Kegelstumpfs zu einem Mantel (2) ausgestaltet wird, wobei der Mantel (2) aus einem Material besteht, das als Grundmaterial Trester, Holzschnitzel, Holzmehl, gemahlener Grünschnitt oder Mischungen davon und als Bindemittel, bezogen auf die Gesamtmasse der Pflanzenschutzvorrichtung, einen Masseanteil von 2 bis 80 % eines Bindemittels ausgewählt aus Kaseinleim, Stärke, Dextrin, Wasserglas, tierischen, pflanzlichen, synthetischen aber auch mineralischen Wachsen, wie z.B. Paraffinwachs oder Bienenwachs bzw. Wachsemulsionen, Lignin, Gummi arabicum, biologisch abbaubare Thermoplaste oder Mischungen davon, beinhaltet, wobei dem Mantel (2) vor, während oder nach der Ausgestaltung, weiterhin eine stabilisierende Gitterstruktur aus pflanzlichen Fasern, vorzugsweise ausgewählt aus Baumwolle, Hanf, Stroh oder Mischungen davon, oder eine stabilisierende Stützstruktur aus einer Folie aus Kaseinleim, hinzugeben, bzw. angebracht wird.

10. Verfahren nach Anspruch 9, wobei dem Grundmaterial vor der Ausgestaltung zusätzlich wenigstens teilweise vergärte Biomasse hinzugegeben wird, bevorzugt vergärter Kot oder vergärte tierische Gülle, besonders bevorzugt Hühnerkotgärreste aus einer Biogasanlage und/oder wobei dem Grundmaterial zusätzlich mineralische Dünger, ökologische Pflanzenschutzmittel oder Mischungen davon zugesetzt wurden.

11. Verfahren nach Anspruch 9 oder 10, wobei das Bindemittel und/oder das Grundmaterial wenigstens in einem Teilbereich des Mantels, bevorzugt einem oberen Teilbereich, vorzugsweise im oberen Drittel des Mantels, eine oder mehrere das Grundmaterial und/oder das Bindemittel abbaufördernde reaktive Substanz(en) beinhaltet, wobei das Bindemittel vorzugsweise wenigstens in dem Teilbereich des Mantels Bienenwachs, Paraffinwachs oder Mischungen davon beinhaltet oder im Wesentlichen daraus besteht.

12. Verfahren nach Anspruch 11, wobei die das Grundmaterial und/oder das Bindemittel abbaufördernde(n) reaktive(n) Substanz(en) aus mineralischen und organischen Säuren, z.B. Carbonsäuren, wie Zitronensäure, Ascorbinsäure oder Essigsäure; und Enzymen, bevorzugt Hydrolasen, wie Glycosidasen, Peptidasen und/oder Esterasen, z.B. Cellulase, Amylase, Pepsin oder Lipase ausgewählt ist/sind.

13. Verfahren nach einem der Ansprüche 9 bis 12, wobei die Mantelstärke zwischen 1 und 15 mm, vorzugsweise zwischen 1,5 und 7 mm beträgt.

14. Verfahren nach einem der Ansprüche 9 bis 13, wobei die Innenseite der Pflanzenschutzvorrichtung mit einer hellen, bevorzugt weißen Oberfläche versehen wird, bevorzugt eine Schicht aus Kalk oder Kalkfarbe.

15. Verfahren nach einem der Ansprüche 9 bis 14, wobei die Pflanzenschutzvorrichtung mit einem gewölbten oder flachen, mit dem Mantel verbundenen Bodenteil versehen wird, das ein oder mehrere Löcher, bevorzugt ein Loch in der Mitte, aufweist.

16. Verfahren nach einem der Ansprüche 9 bis 15, wobei die Ausgestaltung des Grundmaterials mit dem Bindemittel durch Stanzen, Walzen, Pressen, Spritzgießen oder Extrudieren durchgeführt wird.

## Claims

1. Plant protection device (10), in particular for plant seedlings, wherein the plant protection device comprises a sheath (2) which is configured or is configurable in the shape of a hollow cylinder, a three-sided or multi-sided hollow prism or a truncated cone, the sheath (2) consisting of a material which, as the base material, consists of pomace, wood chips, wood flour, ground green cuttings or mixtures thereof and, as the binder, based on the total mass of the plant protection device, comprises a mass fraction of 2 to 80 % of a binder selected from casein glue, starch, dextrin, water glass, animal, vegetable, synthetic but also mineral waxes, such as paraffin wax or beeswax, or wax emulsions, lignin, gum arabic, biodegradable thermoplastics or mixtures thereof, wherein the sheath (2) furthermore contains, as a stabilizing lattice structure, vegetable fibers, preferably selected from cotton, hemp, straw or mixtures thereof, or a film of casein glue as a stabilizing support structure.

2. Plant protection device according to claim 1, wherein the base material additionally comprises at least partially fermented biomass, preferably fermented feces or fermented liquid animal manure, particularly preferably digestates of chicken manure from a biogas plant and/or wherein the base material additionally comprises mineral fertilizers, ecological plant protection agents or mixtures thereof.

3. Plant protection device according to claim 1 or 2, wherein the binder and/or the base material comprises, at least in a partial region of the sheath, preferably an upper partial region, preferably in the upper third of the sheath, one or more reactive substance(s) which promote(s) degradation of the base material and/or the binder, wherein the binder preferably comprises, at least in the partial region of the sheath, beeswax, paraffin wax or mixtures thereof or essentially consists thereof.

4. Plant protection device according to claim 3, wherein the reactive substance(s) promoting the degradation of the base material and/or the binder is selected from mineral and organic acids, e.g. carboxylic acids, such as citric acid, ascorbic acid or acetic acid; and enzymes, preferably hydrolases, such as glycosidases, peptidases and/or esterases, e.g. cellulase, amylase, pepsin or lipase.

5. Plant protection device according to any one of claims 1 to 4, wherein the sheath thickness is between 1 and 15 mm, preferably between 1.5 and 7 mm.

6. Plant protection device according to any one of claims 1 to 5, wherein the inside of the plant protection device has a light-colored, preferably white surface, preferably a layer of lime or lime paint.

7. Plant protection device according to any one of claims 1 to 6, comprising a curved or flat bottom part connected to the sheath and having one or more holes, preferably a hole in the center.

8. Plant protection device according to any one of claims 1 to 7, wherein the base material together with the binder is punched, rolled, pressed, injection molded or extruded.

9. Method for producing a plant protection device (10), in particular for plant seedlings, wherein the base material and the binder are configured to form a sheath (2) in a flat shape or in the shape of a hollow cylinder, a three-sided or multi-sided hollow prism or a truncated cone, wherein the sheath (2) consists of a material which comprises, as the base material, pomace, wood chips, wood flour, ground green waste or mixtures thereof and, as the binder, based on the total mass of the plant protection device, a mass fraction of 2 to 80% of a binder selected from casein glue, starch, dextrin, water glass, animal, vegetable, synthetic and also mineral waxes, such as, for example, paraffin wax or beeswax, or wax emulsions, lignin, gum arabic, biodegradable thermoplastics or mixtures thereof, wherein a stabilizing lattice structure of vegetable fibers, preferably selected from cotton, hemp, straw or mixtures thereof, or a stabilizing support structure of a film of casein glue is further added or attached to the sheath (2) before, during or after the shaping.

10. Method according to claim 9, wherein at least partially fermented biomass is additionally added to the base material before shaping, preferably fermented feces or fermented liquid animal manure, particularly preferably digestates of chicken manure from a biogas plant and/or wherein mineral fertilizers, ecological plant protection agents or mixtures thereof have additionally been added to the base material.

11. Method according to claim 9 or 10, wherein the binder and/or the base material comprises, at least in a partial region of the sheath, preferably an upper partial region, preferably in the upper third of the sheath, one or more reactive substance(s) which promote(s) degradation of the base material and/or the binder, wherein the binder preferably comprises, at least in the partial region of the sheath, beeswax, paraffin wax or mixtures thereof or essentially consists thereof.

12. Method according to claim 11, wherein the reactive substance(s) which promote(s) degradation of the base material and/or the binder is/are selected from mineral and organic acids, e.g. carboxylic acids, such as citric acid, ascorbic acid or acetic acid; and enzymes, preferably hydrolases, such as glycosidases, peptidases and/or esterases, e.g. cellulase, amylase, pepsin or lipase.

13. Method according to any one of claims 9 to 12, wherein the sheath thickness is between 1 and 15 mm, preferably between 1.5 and 7 mm.

14. Method according to any one of claims 9 to 13, wherein the inside of the plant protection device is provided with a light-colored, preferably white surface, preferably a layer of lime or lime paint.

15. Method according to any one of claims 9 to 14, wherein the plant protection device is provided with a curved or flat bottom part connected to the sheath and having one or more holes, preferably a hole in the center.

16. Method according to any one of claims 9 to 15, wherein the shaping of the base material together with the binder is performed by punching, rolling, pressing, injection molding or extruding.

## Revendications

1. Dispositif de protection de végétaux (10), destiné notamment à des plants, le dispositif de protection de végétaux (10) comportant une gaine (2) laquelle est réalisée sous forme d'un cylindre creux, d'un prisme creux à trois ou plusieurs faces, ou d'un cône tronqué ou peut l'être, la gaine (2) étant constituée d'un matériau comprenant, en tant que matériau de base, du marc, des copeaux de bois, des sciures, des végétaux non-ligneux coupés et broyés ou bien leurs mélanges et, en tant que liant, une part massique comprise entre 2 et 80 %, par rapport à la masse totale dudit dispositif de protection de végétaux, d'un liant choisi parmi la colle de caséine, l'amidon, la dextrine, le verre soluble, les cires animales, végétales, synthétiques mais aussi minérales comme, par exemple, la cire de paraffine ou la cire d'abeille et/ou les émulsions de cire, la lignine, la gomme arabique, les matières thermoplastiques biodégradables ou leurs mélanges, la gaine (2) comprenant en outre, en tant que structure de grille stabilisante, des fibres végétales choisies, de préférence, parmi le coton, le chanvre, la paille ou leurs mélanges ou bien, en tant que structure de support stabilisante, une feuille en colle de caséine.

2. Dispositif de protection de végétaux selon la revendication 1, le matériau de base comprenant en outre de la biomasse au moins partiellement fermentée, s'agissant préférentiellement de matières fécales fermentées ou de lisier animal fermenté, avec une préférence particulière de résidus de fermentation de fientes de poules issus d'une installation à biogaz, et/ou le matériau de base comprenant en outre des engrais minéraux, des produits phytosanitaires écologiques ou des mélanges de ceux-ci.

3. Dispositif de protection de végétaux selon les revendications 1 ou 2, le liant et/ou le matériau de base comprenant, au moins dans une partie de ladite gaine, s'agissant préférentiellement d'une partie supérieure, de manière préférée du tiers supérieur de la gaine, une ou plusieurs substance(s) réactive(s) favorisant la dégradation du matériau de base et/ou du liant, le liant comprenant, au moins dans cette partie de la gaine, préférentiellement de la cire d'abeille, de la cire de paraffine ou leurs mélanges ou bien en étant sensiblement constitué.

4. Dispositif de protection de végétaux selon la revendication 3, la ou les substance(s) réactive(s) favorisant la dégradation du matériau de base et/ou du liant étant choisie(s) parmi les acides minéraux et organiques, s'agissant par exemple d'acides carboxyliques tels que l'acide citrique, l'acide ascorbique ou l'acide acétique ; et les enzymes, s'agissant préférentiellement d'hydrolases tel que les glycosidases, de peptidases et/ou d'esterases, par exemple de cellulase, amylase, pepsine ou lipase.

5. Dispositif de protection de végétaux selon l'une des revendications 1 à 4, l'épaisseur de ladite gaine étant comprise entre 1 et 15 mm, de préférence entre 1,5 et 7 mm.

6. Dispositif de protection de végétaux selon l'une des revendications 1 à 5, la face intérieure dudit dispositif de protection de végétaux présentant une surface claire, de préférence blanche, s'agissant préférentiellement d'une couche de chaux ou de peinture à la chaux.

7. Dispositif de protection de végétaux selon l'une des revendications 1 à 6, comprenant une pièce de fond bombée ou plate qui est reliée à ladite gaine et qui comporte un ou plusieurs trous, s'agissant préférentiellement d'un trou au milieu.

8. Dispositif de protection de végétaux selon l'une des revendications 1 à 7, le matériau de base comportant ledit liant ayant subi un poinçonnage, un laminage, un pressage, un moulage par injection ou bien une extrusion.

9. Procédé de fabrication d'un dispositif de protection de végétaux (10), destiné notamment à des plants, le matériau de base et le liant étant réalisés sous une forme plane ou sous forme d'un cylindre creux, d'un prisme creux à trois ou plusieurs faces, ou d'un cône tronqué pour ainsi obtenir une gaine (2), la gaine (2) étant constituée d'un matériau comprenant, en tant que matériau de base, du marc, des copeaux de bois, des sciures, des végétaux non-ligneux coupés et broyés ou bien leurs mélanges et, en tant que liant, une part massique compris entre 2 et 80 %, par rapport à la masse totale du dispositif de protection de végétaux, d'un liant choisi parmi la colle de caséine, l'amidon, la dextrine, le verre soluble, les cires animales, végétales, synthétiques mais aussi minérales comme, par exemple, la cire de paraffine ou la cire d'abeille et/ou les émulsions de cire, la lignine, la gomme arabique, les matières thermoplastiques biodégradables ou leurs mélanges, la gaine (2) étant en outre, avant sa mise en forme, pendant celle-ci ou après, dotée d'une structure de grille stabilisante en fibres végétales lesquelles sont choisies, de préférence, parmi le coton, le chanvre, la paille ou leurs mélanges ou bien d'une structure de support stabilisante faite d'une feuille en colle de caséine.

10. Procédé selon la revendication 9, de la biomasse au moins partiellement fermentée étant ajoutée de manière supplémentaire, avant la mise en forme, au matériau de base, cette première correspondant préférentiellement à des matières fécales fermentées ou du lisier animal fermenté, s'agissant avec une préférence particulière de résidus de fermentation de fientes de poules issus d'une installation à biogaz, et/ou des engrais minéraux, des produits phytosanitaires écologiques ou des mélanges de ceux-ci ayant été ajouté, de manière supplémentaire, audit matériau de base.

11. Procédé selon les revendications 9 ou 10, le liant et/ou le matériau de base comprenant, au moins dans une partie de ladite gaine, s'agissant préférentiellement d'une partie supérieure, de manière préférée du tiers supérieur de la gaine, une ou plusieurs substance(s) réactive(s) favorisant la dégradation du matériau de base et/ou du liant, le liant comprenant, au moins dans ladite partie de la gaine, préférentiellement de la cire d'abeille, de la cire de paraffine ou leurs mélanges ou bien en étant sensiblement constitué.

12. Procédé selon la revendication 11, la ou les substance(s) réactive(s) favorisant la dégradation du matériau de base et/ou du liant étant choisie(s) parmi les acides minéraux et organiques, s'agissant par exemple d'acides carboxyliques tels que l'acide citrique, l'acide ascorbique ou l'acide acétique ; et les enzymes, s'agissant préférentiellement d'hydrolases tel que les glycosidases, de peptidases et/ou d'esterases, par exemple de cellulase, amylase, pepsine ou lipase.

13. Procédé selon l'une des revendications 9 à 12, l'épaisseur de ladite gaine étant comprise entre 1 et 15 mm, de préférence entre 1,5 et 7 mm.

14. Procédé selon l'une des revendications 9 à 13, la face intérieure dudit dispositif de protection de végétaux présentant une surface claire, de préférence blanche, s'agissant préférentiellement d'une couche de chaux ou de peinture à la chaux.

15. Procédé selon l'une des revendications 9 à 14, ledit dispositif de protection de végétaux étant pourvu d'une pièce de fond bombée ou plate qui est reliée à ladite gaine et qui comporte un ou plusieurs trous, s'agissant préférentiellement d'un trou au milieu.

16. Procédé selon l'une des revendications 9 à 15, le matériau de base comportant ledit liant étant mis en forme en le soumettant à un poinçonnage, un laminage, un pressage, un moulage par injection ou bien à une extrusion.
